# EUROPEAN PATENT APPLICATION

(11) **EP 4 748 490 A1**
(43) Date of publication of application: **27.05.2026**
(21) Application number: 23945836.7
(22) Date of filing: 18.07.2023
(51) Int. Cl.: B01J 19/08

(54) **GAS REFORMING DEVICE**

(71) Applicant: MITSUBISHI ELECTRIC CORPORATION, Chiyoda-ku Tokyo 100-8310 (JP)
(72) Inventor: NAITO, Teruki, Tokyo 100-8310 (JP); INANAGA, Yasutaka, Tokyo 100-8310 (JP); OINUMA, Gaku, Tokyo 100-8310 (JP); SHIOTA, Arufa, Tokyo 100-8310 (JP)
(74) Representative: Meissner Bolte Partnerschaft mbB
(86) International application number: PCT/JP2023/026273
(87) International publication number: WO 2025/017832

(57) **Abstract**

The gas reforming device (100) is provided with: a reaction container (2) including a first reaction chamber (41) into which a gas to be reformed (G1) flows, and a second reaction chamber (42) into which the gas to be reformed (G1) flows after passing through the first reaction chamber (41) ,the second reaction chamber (42) being thermally separated from the first reaction chamber (41); first and second electrodes (31, 32) that are provided in the first reaction chamber (41) and generate plasma (P) in the first reaction chamber (41); a lead-out electrode (33) that is provided in the second reaction chamber (42) and draws out the plasma (P) from the first reaction chamber (41) into the second reaction chamber (42); and a reaction accelerator (7) disposed on the lead-out electrode (33).

## Description

### TECHNICAL FIELD

The present invention relates to a gas reforming device.

### BACKGROUND ART

A plasma reactor is known, in which a gas to be reformed is reacted with plasma to reform the gas to be reformed into a value-added substance (Patent Document 1).

### CITATION LIST

### PATENT DOCUMENT

Patent Document 1: International Publication No. WO 2022/234039 A1

### SUMMARY OF THE INVENTION

### PROBLEM TO BE SOLVED BY THE INVENTION

In a gas reforming device in which plasma is generated to reform a gas to be reformed, it has been required to obtain a larger amount of reformed gas with respect to the amount of energy input into the gas reforming device.

The present invention has been made in view of the above circumstances, and an object of the present invention is to provide the gas reforming device capable of efficiently reforming the gas to be reformed.

### MEANS TO SOLVE THE PROBLEM

The gas reforming device according to the present invention includes:
a reaction container including
   a first reaction chamber into which a gas to be reformed flows, and
   a second reaction chamber, into which the gas to be reformed flows after passing through the first reaction chamber, and which is thermally separated from the first reaction chamber;
a lead-out electrode provided in the second reaction chamber and configured to draw out the plasma from the first reaction chamber into the second reaction chamber; and
a reaction accelerator disposed on the lead-out electrode.

### EFFECT OF THE INVENTION

According to the gas reforming device of the present invention, the gas to be reformed can be efficiently reformed.

### BRIEF DESCRIPTION OF THE DRAWINGS

FIG. 1 is a cross-sectional view showing the gas reforming device according to Embodiment 1.
FIG. 2 is a cross-sectional view of the A-A section shown in FIG. 1.
FIG. 3 is a cross-sectional view of the B-B section shown in FIG. 1.
FIG. 4 is a schematic view showing another configuration example of a power supply circuit in the gas reforming device according to Embodiment 1.
FIG. 5 is a schematic view showing an example of a gas flow in the gas reforming device according to Embodiment 1.
FIG. 6 is a cross-sectional view showing a gas reforming device according to modified example 1 of Embodiment 1.
FIG. 7 is a cross-sectional view showing a gas reforming device according to modified example 2 of Embodiment 1.
FIG. 8 is a cross-sectional view of the C-C section shown in FIG. 7.
FIG. 9 is a cross-sectional view showing a gas reforming device according to modified example 3 of Embodiment 1.
FIG. 10 is a cross-sectional view of the D-D section shown in FIG. 9.
] FIG. 11 is a cross-sectional view showing a gas reforming device according to modified example 4 of Embodiment 1.
FIG. 12 is a cross-sectional view showing a gas reforming device according to modified example 5 of Embodiment 1.
FIG. 13 is a cross-sectional view of the E-E section shown in FIG. 12.
FIG. 14 is a cross-sectional view showing another configuration of a gas reforming device according to modified example 5 of Embodiment 1.
FIG. 15 is a cross-sectional view showing a gas reforming device according to modified example 6 of Embodiment 1.
FIG. 16 is a cross-sectional view showing a gas reforming device according to Embodiment 2.
FIG. 17 is a cross-sectional view of the F-F section shown in FIG. 16.
FIG. 18 is a cross-sectional view showing a gas reforming device according to a modified example of Embodiment 2.
FIG. 19 is a cross-sectional view of the G-G section shown in FIG. 18.

### DESCRIPTION OF EMBODIMENTS

Hereinafter, the gas reforming device according to embodiments of the present invention will be described based on the drawings.

Note that each of the following drawings is schematically illustrated, and the dimensional ratios and the number of components in the drawings do not necessarily correspond to the actual dimensional ratios and the actual number of components.

### Embodiment 1

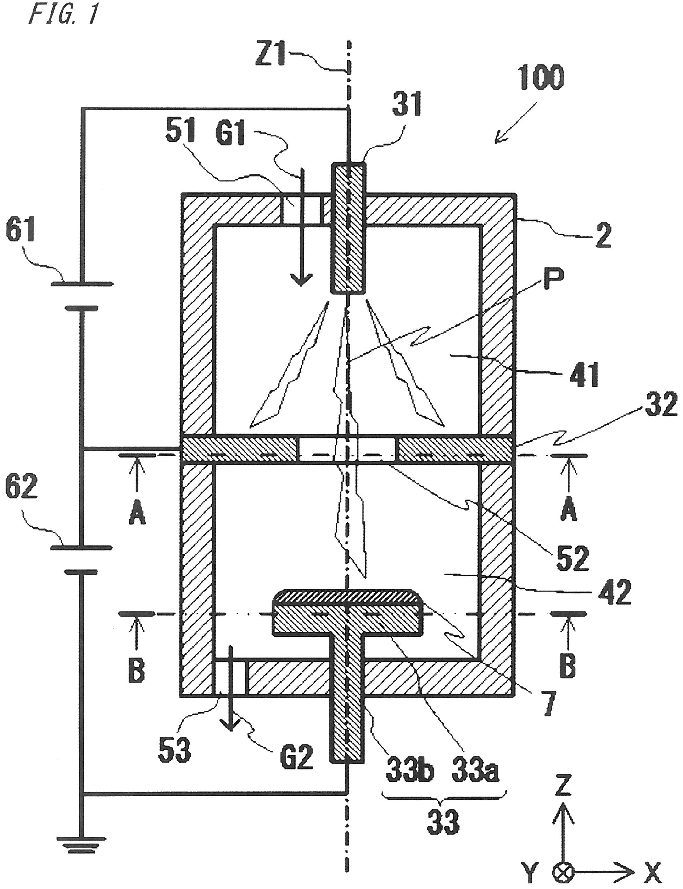

The configuration of a gas reforming device 100 according to Embodiment 1 will be described with reference to FIGS. 1 to 4. FIGS. 1 to 4 are schematic views showing the configuration of the gas reforming device 100 according to Embodiment 1.

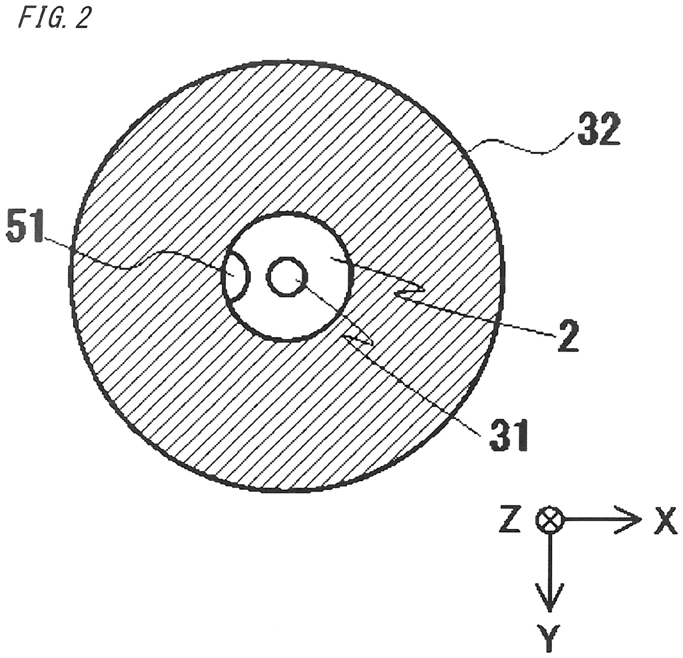

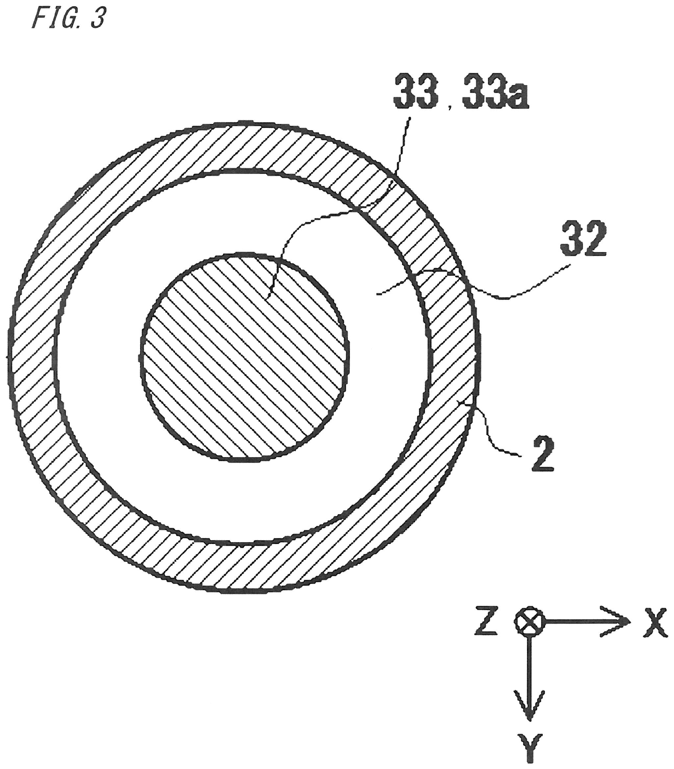

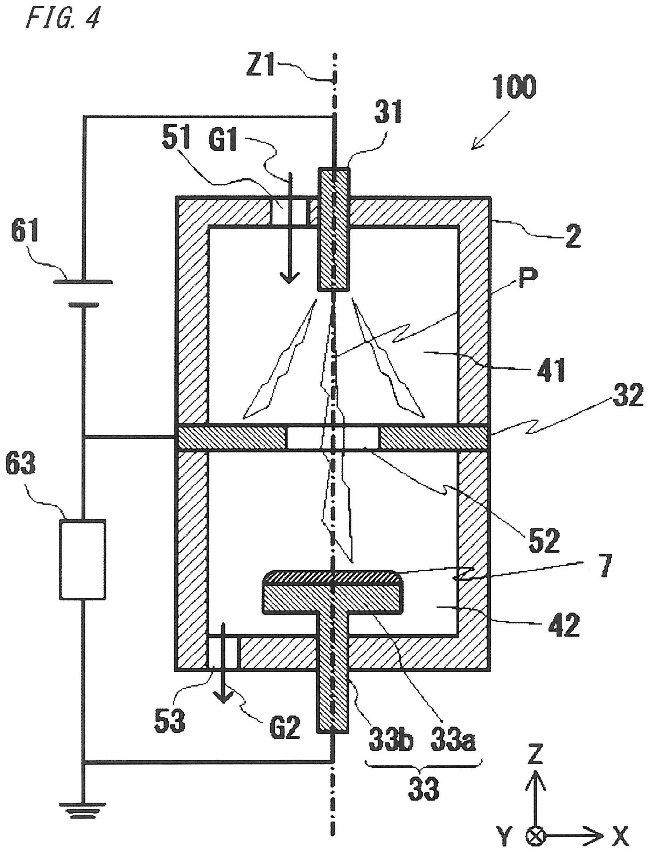

FIG. 2 is the cross-sectional view of the A-A section shown in FIG. 1. FIG. 3 is the cross-sectional view of the B-B section shown in FIG. 1. FIG. 4 is the schematic view showing another configuration example of a power supply circuit in the gas reforming device 100 shown in FIG. 1.

As shown in FIG. 1, the gas reforming device 100 includes:
a reaction container 2 including a first reaction chamber 41 into which a gas to be reformed G1 flows and a second reaction chamber 42 into which the gas to be reformed G1 having passed through the first reaction chamber 41 flows;
a first electrode 31 and a second electrode 32 which are provided in the first reaction chamber 41 and configured to generate plasma P in the first reaction chamber 41;
a third electrode 33, which is a lead-out electrode provided in the second reaction chamber 42 and configured to draw out the plasma P from the first reaction chamber 41 into the second reaction chamber 42; and
a reaction accelerator 7 disposed on the third electrode 33, which is the lead-out electrode.

Here, in the present specification, the direction in which the first reaction chamber 41 and the second reaction chamber 42 face each other is defined as a Z-axis, and a plane orthogonal to the Z-axis is defined as an XY-plane. In the following description, reference is made as appropriate to the XYZ coordinate system defined in this manner. Note that, in the present specification, when distinguishing the positive and negative directions, notation such as "+Z direction" and "-Z direction" is used by attaching positive and negative signs. When not distinguishing the positive and negative directions, the direction is simply referred to as the "Z direction".
That is, in the present specification, when it is simply referred to as the "Z direction", it includes both "+Z direction" and "-Z direction". In the present embodiment, the direction from the first reaction chamber 41 toward the second reaction chamber 42 is the -Z direction.

The shape of the reaction container 2 is an axisymmetric shape with the Z1 axis shown in FIG. 1 as a symmetry axis. In the present embodiment, the Z1 axis is parallel to the Z-axis. Specifically, for example, the shape of the reaction container 2 is a cylindrical shape having end surfaces at both ends. However, the shape of the reaction container 2 is not particularly limited as long as it is a hollow container, and it is not essential to be axisymmetric or to have a symmetric structure.

The material constituting the reaction container 2 is not particularly limited, but a material having high insulation and durability is preferable. Specifically, the reaction container 2 is preferably made of glass or ceramics. Specific examples of the glass constituting the reaction container 2 include quartz glass and borosilicate glass. Specific examples of the ceramics constituting the reaction container 2 include alumina (Al₂O₃), zirconia (ZrO₂), and magnesia (MgO).

As shown in FIG. 1, the reaction container 2 is provided with a gas inlet 51 for allowing the gas to be reformed G1 to flow into the first reaction chamber 41. The position where the gas inlet 51 is provided is not particularly limited as long as the gas to be reformed G1 can be introduced into the first reaction chamber 41. The gas inlet 51 may be provided at a plurality of locations. In the present embodiment, the gas inlet 51 is provided at one location on the end surface on the +Z direction side of the reaction container 2.

As shown in FIG. 1, the reaction container 2 is provided with a gas outlet 53 for discharging a reformed gas G2 from the second reaction chamber 42. The position where the gas outlet 53 is provided is not particularly limited as long as the reformed gas G2 can be discharged from the second reaction chamber 42. The gas outlet 53 may be provided at a plurality of locations. In the present embodiment, the gas outlet 53 is provided at one location on the end surface on the -Z direction side of the reaction container 2.

As shown in FIG. 1, the first electrode 31 is disposed on the end surface of the reaction container 2 on the +Z direction side, which is the direction from the second reaction chamber 42 toward the first reaction chamber 41.
The first electrode 31 is exposed in the first reaction chamber 41, and thus can be said to be provided in the first reaction chamber 41.

As shown in FIGS. 1 and 2, the shape of the first electrode 31 is cylindrical. However, the shape of the first electrode 31 is not limited to this.

The first electrode 31 is made of a conductive material. Specific examples of the material constituting the first electrode 31 include stainless steel, titanium, molybdenum, and tungsten. However, the material constituting the first electrode 31 is not limited to these as long as it is a conductive material having high corrosion resistance and heat resistance.

As shown in FIG. 1, the second electrode 32 is disposed at a position spaced in the -Z direction from the first electrode 31 when viewed from the first electrode 31, in the reaction container 2. The second electrode 32 can also be said to be provided in the first reaction chamber 41.
The second electrode 32 faces the first electrode 31 in the first reaction chamber 41. The first electrode 31 and the second electrode 32 are electrodes for generating plasma P in the first reaction chamber 41.

As shown in FIGS. 1 and 2, the shape of the second electrode 32 is disk-shaped. The second electrode 32 is provided with an opening 52. The opening 52 is an opening that communicates the first reaction chamber 41 and the second reaction chamber 42. The second electrode 32 also serves as a member that thermally separates the first reaction chamber 41 and the second reaction chamber 42. Here, in the present specification, "thermally separates" means that a certain member or structure suppresses heat transfer by conduction, convection, or radiation, and includes thermal insulation.

The second electrode 32 is made of a conductive material, like the first electrode 31. Specific examples of the material constituting the second electrode 32 are the same as those of the first electrode 31, and therefore are omitted from the description. The second electrode 32 may be made of a material different from that of the first electrode 31. For example, the first electrode 31 may be made of a material containing tungsten, and the second electrode 32 may be made of a material containing molybdenum.

As shown in FIG. 1, the third electrode 33 is provided on the end surface of the reaction container 2 on the -Z direction side, which is the direction from the first reaction chamber 41 toward the second reaction chamber 42.
The third electrode 33 can also be said to be provided in the second reaction chamber 42. The third electrode 33 faces the first electrode 31 via the opening 52. The third electrode 33 also faces the second electrode 32 in the second reaction chamber 42.

As shown in FIGS. 1 and 3, the third electrode 33 has a shape including a distal end portion 33a and a shaft portion 33b. In the present embodiment, the distal end portion 33a is disk-shaped, and the shaft portion 33b is cylindrical. However, the shape of the third electrode 33 in the present embodiment is merely an example. For example, the distal end portion 33a may have a tapered shape in which the diameter decreases toward the distal end. Further, it is not essential for the third electrode 33 to have the distal end portion 33a, and the shape of the third electrode 33 may be cylindrical including only the shaft portion 33b.

The third electrode 33 is made of a conductive material, like the first electrode 31. Specific examples of the material constituting the third electrode 33 are the same as those of the first electrode 31, and therefore are omitted from the description. The third electrode 33 may be made of a material different from that of the first electrode 31 or the second electrode 32.

As shown in FIG. 1, on a surface of the distal end portion 33a of the third electrode 33, the surface facing the opening 52, the reaction accelerator 7 is disposed. The reaction accelerator 7 is a substance that promotes a reforming reaction of a gas to be reformed G1 by plasma P. The reaction accelerator 7 may be provided over the entire surface of the distal end portion 33a facing the opening 52, or may be provided on a part of the surface. Note that details of the reforming reaction of the gas to be reformed G1 by the plasma P will be described later. The reaction accelerator 7 is selected as an appropriate substance according to the type of the gas to be reformed G1. The reaction accelerator 7 is, for example, a catalyst, a reducing agent, or an oxidizing agent.

A representative mode of disposition of the reaction accelerator 7 on the third electrode 33 is a mode in which the reaction accelerator 7 is placed or adhered on a surface of the third electrode 33. However, the mode of disposing the reaction accelerator 7 on the third electrode 33 is not limited to these. For example, the reaction accelerator 7 may be disposed on the third electrode 33 by a mode of modifying the surface of the third electrode 33 with a substance containing the reaction accelerator 7. Specifically, for example, when the third electrode 33 is made of tungsten and the reaction accelerator 7 is carbon as a reducing agent, the third electrode 33 may be subjected to a carbonization treatment to modify a surface of the third electrode 33 into tungsten carbide. The carbonization treatment is performed, for example, by preparing a solution in which carbon powder is dispersed in a solvent, applying the solution to a surface of the third electrode 33, and then heat-treating the third electrode 33 in an electric furnace or the like.

As shown in FIG. 1, the first electrode 31 and the second electrode 32 are connected via a first power supply 61. The first power supply 61 is a DC power supply that applies a voltage between the first electrode 31 and the second electrode 32. When a predetermined voltage is applied between the first electrode 31 and the second electrode 32, plasma P can be generated inside the first reaction chamber 41.

The voltage value output by the first power supply 61 is appropriately designed according to various conditions so as to stably generate the plasma P. Conditions considered for designing the voltage value output by the first power supply 61 include, for example, the distance between the first electrode 31 and the second electrode 32, the composition of the gas to be reformed G1, the flow rate of the gas to be reformed G1, and the pressure inside the first reaction chamber 41.

Note that the first power supply 61 is not limited to the DC power supply. As long as the plasma P can be generated inside the first reaction chamber 41, the first power supply 61 may be an AC power supply or a pulse power supply. The peak value and frequency in the case where the first power supply 61 is the AC power supply are, like the case where the first power supply 61 is the DC power supply, appropriately designed according to various conditions. In addition, the peak value and duty ratio in the case where the first power supply 61 is the pulse power supply are, like the case where the first power supply 61 is the DC power supply, appropriately designed according to various conditions.

As shown in FIG. 1, the second electrode 32 and the third electrode 33 are connected via a second power supply 62. The third electrode 33 is also grounded. The second power supply 62 is a DC power supply that applies a voltage between the second electrode 32 and the third electrode 33. When a predetermined voltage is applied between the second electrode 32 and the third electrode 33, plasma P generated in the first reaction chamber 41 can be drawn into the second reaction chamber 42. Therefore, the third electrode 33 can be said to be a drawing electrode that draws plasma P, generated in the first reaction chamber 41, into the second reaction chamber 42.

The voltage value output by the second power supply 62 is appropriately designed according to various conditions so that plasma P generated in the first reaction chamber 41 can be drawn into the second reaction chamber 42. Conditions considered for designing the voltage value output by the second power supply 62 include, for example, the distance between the first electrode 31 and the third electrode 33, the distance between the second electrode 32 and the third electrode 33, the composition of the gas to be reformed G1, the flow rate of the gas to be reformed G1, and the pressure inside the second reaction chamber 42. The second power supply 62 may also be replaced with an AC power supply or a pulse power supply instead of the DC power supply.

It is not essential that the gas reforming device 100 includes the second power supply 62. As shown in FIG. 4, the gas reforming device 100 may be configured to include a passive element 63 instead of the second power supply 62. The passive element 63 is, for example, a resistor or a capacitor.

In the configuration shown in FIG. 4, a potential difference with respect to the ground potential is generated between the second electrode 32 and the third electrode 33 by the action of the first power supply 61 and the passive element 63. Then, due to this potential difference, plasma P is drawn into the second reaction chamber 42.

By adopting a configuration in which the passive element 63 is provided instead of the second power supply 62, the configuration of the power supply circuit of the gas reforming device 100 can be simplified. By simplifying the configuration of the power supply circuit of the gas reforming device 100, an effect is achieved in which the maintenance of the gas reforming device 100 becomes easier.

In a case where a lead wire connecting the second electrode 32 and the third electrode 33 causes a potential difference that draws plasma P into the interior of the second reaction chamber 42, the gas reforming device 100 may be configured without including the passive element 63. By adopting a configuration in which the passive element 63 is omitted, it is possible to further simplify the configuration of the power supply circuit of the gas reforming device 100.

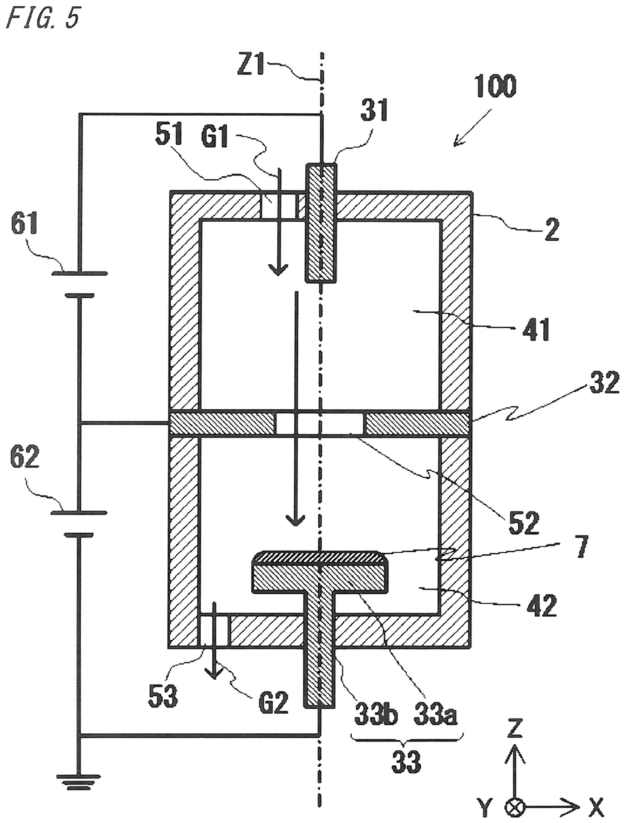

Next, operation of the gas reforming device 100 according to Embodiment 1 will be described with reference to FIGS. 1 and 5. FIG. 5 is a schematic diagram showing an example of a flow of the gas to be reformed G1 in the gas reforming device 100 according to Embodiment 1.

First, a flow of the gas to be reformed G1 in the gas reforming device 100 will be described. As shown in FIG. 5, the gas to be reformed G1 flows from the gas inlet 51 into the first reaction chamber 41. The gas to be reformed G1 that has flowed through the interior of the first reaction chamber 41 flows from the opening 52 into the second reaction chamber 42 and flows through the interior of the second reaction chamber 42. Then, the reformed gas G2 reformed in the interior of the first reaction chamber 41 and the interior of the second reaction chamber 42 flows out from the gas outlet 53.

Next, an action of plasma P in the gas reforming device 100 will be described. When a high voltage is applied between the first electrode 31 and the second electrode 32, plasma P is generated in the interior of the first reaction chamber 41. By this plasma P, the gas to be reformed G1 flowing through the interior of the first reaction chamber 41 is reformed. Note that a mechanism of the reforming of the gas to be reformed G1 by the plasma P will be described later.

When a high voltage is applied between the second electrode 32 and the third electrode 33, the plasma P generated in the interior of the first reaction chamber 41 is drawn into the interior of the second reaction chamber 42. By this plasma P, the gas to be reformed G1 flowing through the interior of the second reaction chamber 42 is reformed.

Further, by the action of the reaction accelerator 7 disposed on the third electrode 33, a reforming reaction of the gas to be reformed G1 by the plasma P is promoted. Here, since the reaction accelerator 7 is disposed on the third electrode 33, the reaction accelerator 7 receives heat from the third electrode 33, which has been heated by receiving heat from the plasma P, and is heated. Furthermore, since the reaction accelerator 7 is disposed in the second reaction chamber 42 that is thermally separated from the first reaction chamber 41, the reaction accelerator 7 is unlikely to dissipate heat and is unlikely to decrease in temperature. Since the reaction efficiency with the gas to be reformed G1 increases as the temperature of the reaction accelerator 7 increases, according to the gas reforming device 100 of the present embodiment, the reforming efficiency of the gas to be reformed G1 (the amount of the reformed gas G2 generated with respect to the amount of input energy) is improved.

Further, since the reaction accelerator 7 is disposed on the side (+Z side) of the third electrode 33 facing the opening 52, the reaction accelerator 7 comes into contact with the plasma P. At this time, the reaction accelerator 7 is heated by the heat received from the plasma P and the heat generated by the reforming reaction of the gas to be reformed G1. By disposing the reaction accelerator 7 so that the reaction accelerator 7 comes into contact with the plasma P in this way, the gas to be reformed G1 can be more efficiently reformed.

Further, in the gas reforming device 100 according to the present embodiment, since the reaction accelerator 7 is disposed such that the plasma P comes into contact with the reaction accelerator 7, energy loss until molecules excited by the plasma P reach the reaction accelerator 7 is suppressed. In addition, the molecules excited by the plasma P can reach the reaction accelerator 7 before disappearing by recombination or diffusion. Due to such an effect as well, the reforming efficiency of the gas to be reformed G1 by the plasma P is improved.

Next, a mechanism of gas reforming by the gas reforming device 100 according to Embodiment 1 will be described. Here, a case will be described as an example in which the gas to be reformed G1 is carbon dioxide (CO₂), the reaction accelerator 7 is carbon (C), and carbon monoxide (CO) is generated as the reformed gas G2. Note that the carbon functions as a reducing agent. In addition, this example is one case assuming that the gas reforming device 100 reforms the gas to be reformed G1 (CO₂) into a substance (CO) usable as fuel. The gas to be reformed G1, the reaction accelerator 7, and the reformed gas G2 are not limited to these.

By a high voltage applied between the first electrode 31 and the second electrode 32, electrons existing in the space in the first reaction chamber 41 are accelerated. At this time, when a molecule of CO₂ collides with a high-energy electron, CO is generated by the decomposition reaction of Equation (1).

e + CO₂ → CO + O ... (1)

Here, in Equation (1), e represents an electron, and O represents atomic oxygen. Note that, in the decomposition reaction of Equation (1), there exist multiple reaction pathways, such as direct dissociation by electrons or dissociation via vibrational excitation levels of CO₂. However, in Equation (1), these multiple reaction pathways are collectively represented.

A part of the O generated by the reaction of Equation (1) is converted into oxygen (O₂) by bonding with another O. Also, a part of the O generated by the reaction of Equation (1) recombines with CO to be converted into CO₂. Further, a part of the CO generated by the reaction of Equation (1) is oxidized by the O₂ generated by the reaction of Equation (1), and is converted into CO₂. Here, since the intention is to generate CO as the reformed gas G2, the conversion of CO generated by the reaction of Equation (1) into CO₂ means a reduction in the gas reforming efficiency. Therefore, the O generated by the reaction of Equation (1) and the O₂ generated by the bonding of O are preferably removed promptly.

Here, in the gas reforming device 100 according to Embodiment 1, the carbon (C), which is the reaction accelerator 7, is disposed on the third electrode 33, and the plasma P comes into contact with the carbon (C), which is the reaction accelerator 7. At this time, by the oxidation reaction of Equation (2), the O generated by the reaction of Equation (1) is removed. Also, by the oxidation reaction of Equation (3), the O₂ generated by the bonding of O from the reaction of Equation (1) is removed.

C + O → CO... (2)

C + O₂ → CO₂... (3)

Further, between C (carbon) and CO₂, and CO, the Boudouard equilibrium relationship of Equation (4) is established.

C + CO₂ ⇄ 2CO ... (4)

Here, the generation of CO by Equations (2) and (4) increases as the temperature rises. That is, the reforming efficiency from CO₂, which is the gas to be reformed G1, to CO, which is the reformed gas G2, increases as the temperature rises.

In the gas reforming device 100 according to Embodiment 1, plasma P is drawn into the second reaction chamber 42 by the third electrode 33, which is the lead-out electrode, and the plasma P is brought into contact with carbon (C), which is the reaction accelerator 7. Therefore, with respect to the O generated from CO₂ by the plasma P (see Equation (1)), the O can be removed by reacting it with carbon (C), which is the reaction accelerator 7, before the O recombines with CO (see Equation (2)). That is, according to the gas reforming device 100 of Embodiment 1, reduction in the reforming efficiency of the gas to be reformed G1 can be prevented.

Furthermore, in the gas reforming device 100 according to Embodiment 1, since the carbon (C), which is the reaction accelerator 7, is disposed in the second reaction chamber 42 that is thermally separated from the first reaction chamber 41, the carbon (C), which is the reaction accelerator 7, can be maintained at a high temperature. Since the chemical reaction for removing O (Equation (2)) and the chemical reaction for removing O₂ (Equation (3)) are activated more as the temperature increases, the O and O₂, which are causes of reduction in the gas reforming efficiency, can be more effectively removed by maintaining the carbon (C), which is the reaction accelerator 7, at a high temperature. In addition, by maintaining the carbon (C), which is the reaction accelerator 7, at a high temperature, the generation of CO by Equation (4) can be further promoted. Therefore, according to the gas reforming device 100 of Embodiment 1, CO₂ can be efficiently reformed into CO.

It should be noted that the description of gas reforming exemplifying the case in which the gas to be reformed G1 is CO₂ is an example of reforming the gas to be reformed G1 into a substance usable as fuel by the gas reforming device 100. The gas reforming device 100 is also applicable to other uses. For example, the gas reforming device 100 can be used for reforming substances with high harmfulness contained in the gas to be reformed G1 into substances with low harmfulness. Specifically, for example, decomposition of volatile organic compounds (VOC) such as toluene or xylene using a catalyst such as platinum (Pt) or palladium (Pd) can be cited.

In addition, the gas reforming device 100 is also applicable to uses for reforming gases to be reformed that have high global warming potential into substances with low global warming potential. Specifically, for example, decomposition of nitrous oxide (N₂O) into nitrogen (N₂) and oxygen (O₂) using a catalyst such as platinum (Pt) or palladium (Pd) can be cited.

The configuration of the gas reforming device 100 described above is merely an example, and the gas reforming device 100 of the present embodiment can employ various modifications. The structure in the modified examples will be described below with reference to the drawings. Note that, points common to the gas reforming device 100 according to Embodiment 1 will be omitted or simplified in the description. Also, the same reference numerals are given to components common to the gas reforming device 100 of Embodiment 1.

### Modified Example 1

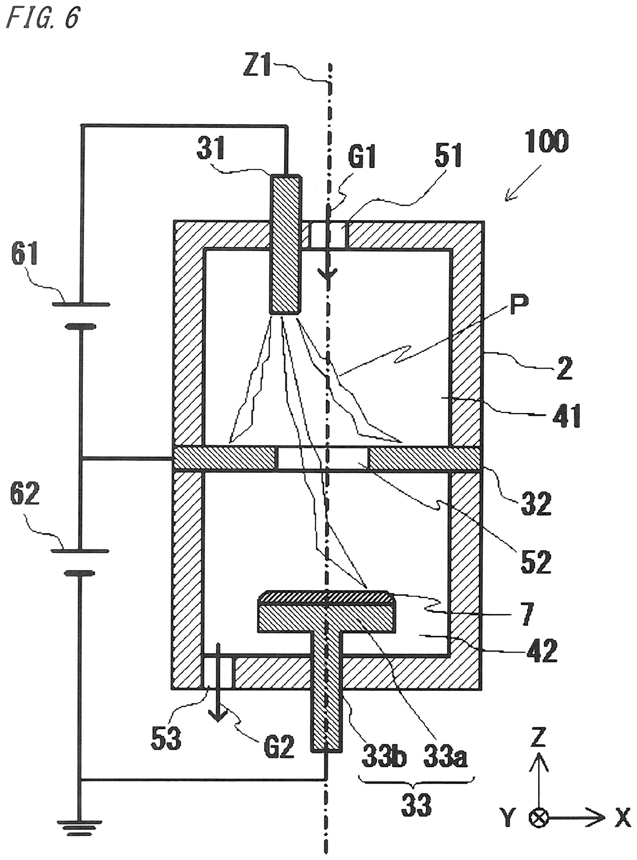

Modified example 1 of Embodiment 1 will be described with reference to FIG. 6. FIG. 6 is a sectional view showing the gas reforming device 100 according to modified example 1 of Embodiment 1.

The shape of plasma P formed in the gas reforming device 100 depends on the electric fields inside the first reaction chamber 41 and the second reaction chamber 42, and the flow of the gas to be reformed G1 inside the first reaction chamber 41 and the second reaction chamber 42.

As shown in FIG. 6, in the gas reforming device 100 of modified example 1, the first electrode 31 is disposed at a position shifted from the Z1 axis on which the third electrode 33 is disposed. In the configuration shown in FIG. 6, the plasma P takes a curved shape when viewed in the Y direction. When the shape of the plasma P is curved, the length of the plasma P in the first reaction chamber 41 can be extended compared to the case where it is not curved. When the length of the plasma P in the first reaction chamber 41 is extended, a larger amount of the gas to be reformed G1 comes into contact with the plasma P, so that the ratio of the gas to be reformed G1 reformed by the plasma P is increased.

### Modified Example 2

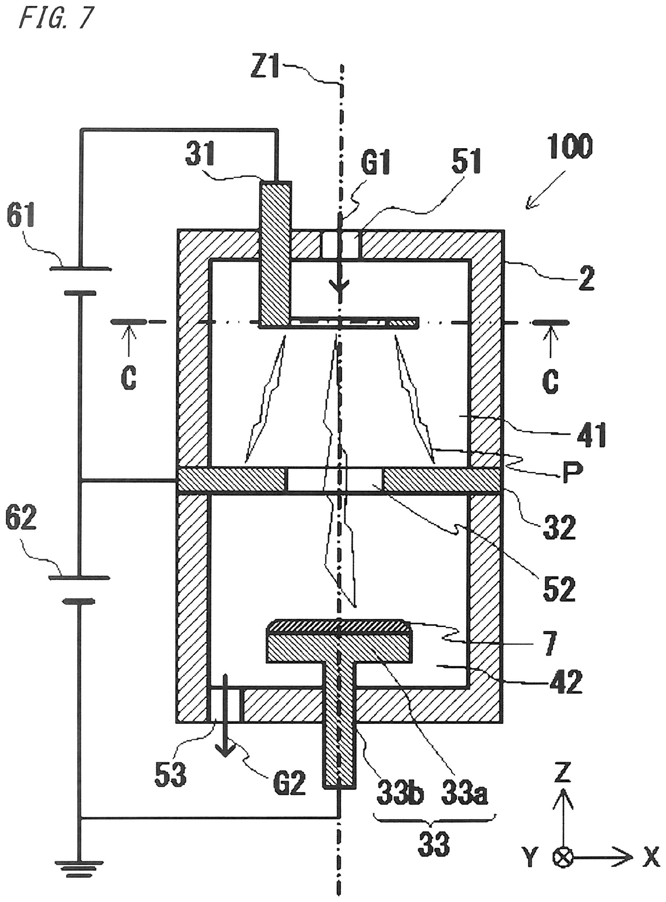

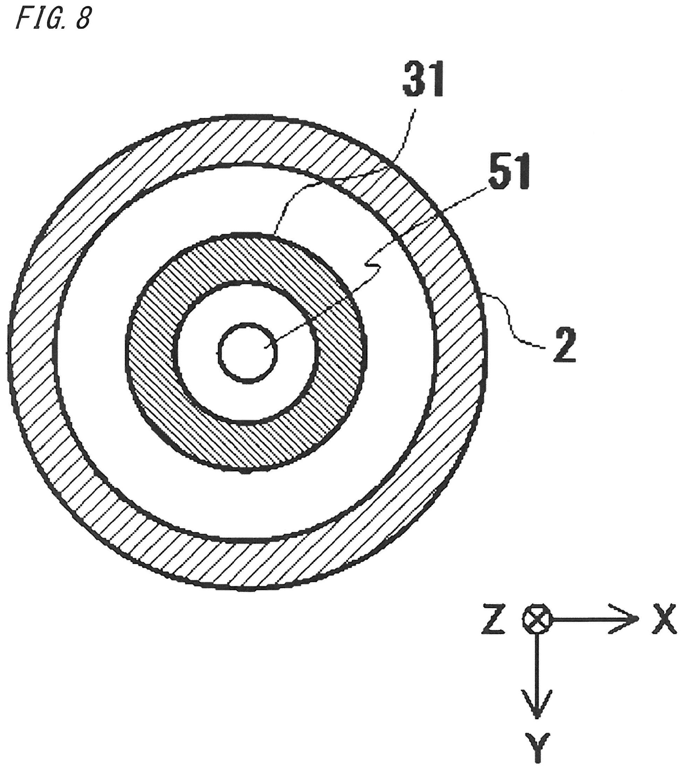

Modified example 2 of Embodiment 1 will be described with reference to FIGS. 7 and 8. FIG. 7 is a sectional view showing the gas reforming device 100 according to modified example 2 of Embodiment 1. FIG. 8 is a sectional view of section C-C shown in FIG. 7.

The path of the plasma P generated between the first electrode 31 and the second electrode 32 changes depending on the electric field inside the first reaction chamber 41 and the flow of the gas to be reformed G1 inside the first reaction chamber 41. Also, the path of the plasma P generated between the first electrode 31 and the third electrode 33 changes depending on the electric fields inside the first reaction chamber 41 and the second reaction chamber 42, and the flow of the gas to be reformed G1 inside the first reaction chamber 41 and the second reaction chamber 42. In addition, when the path of the plasma P changes, the contact portion with the plasma P may move at each electrode.

As shown in FIGS. 7 and 8, in the gas reforming device 100 of modified example 2, the distal end shape of the first electrode 31 is ring-shaped. In this case, compared to when the first electrode 31 is cylindrical (see FIGS. 1 and 2), the distal end surface of the first electrode 31 is widely spread in a plane (XY plane) perpendicular to the direction in which the first electrode 31 and the second electrode 32 face each other.

Therefore, the first electrode 31 having a ring-shaped distal end has a larger range of movement of the contact portion with the plasma P. When the contact portion between the first electrode 31 and the plasma P moves greatly, it is possible to prevent the first electrode 31 from being locally heated. By preventing the first electrode 31 from being locally heated, wear and deformation of the first electrode 31 can be suppressed, so that the service life of the first electrode 31 can be extended.

As described above, in the gas reforming device 100 of modified example 2, since the service life of the first electrode 31 can be extended, the gas reforming device 100 can be operated stably over a long period of time. In addition, by extending the service life of the first electrode 31, the frequency of replacement of the first electrode 31 can be reduced, so that the maintenance man-hours of the gas reforming device 100 can be suppressed. Note that the shape of the first electrode 31 in modified example 2 is an example of a modification for extending the service life of the first electrode 31. The shape of the first electrode 31 is appropriately designed for the purpose of extending the service life or other objectives.

### Modified Example 3

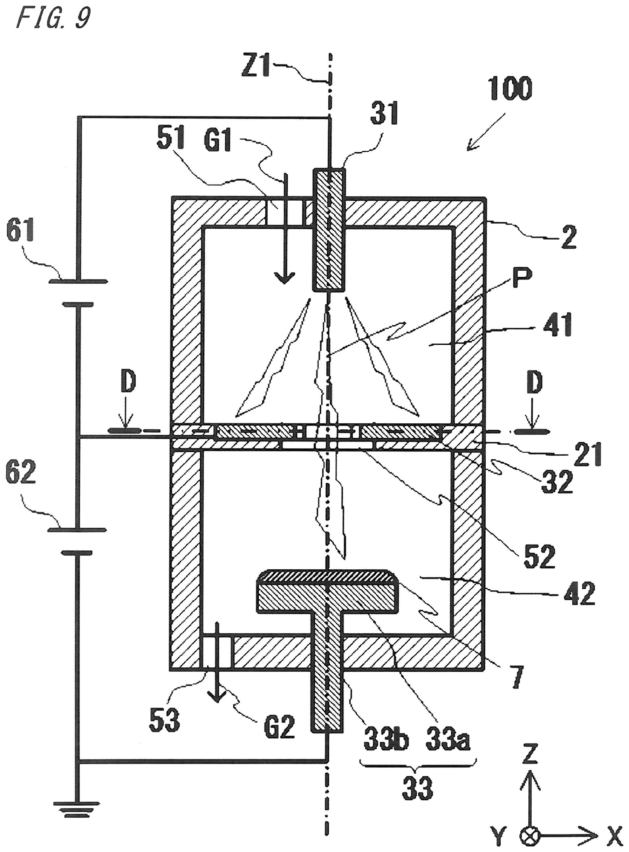

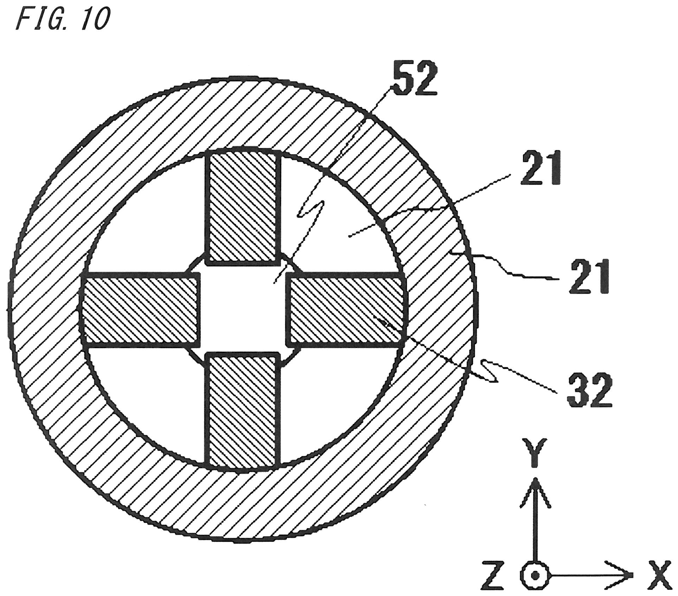

Modified example 3 of Embodiment 1 will be described with reference to FIGS. 9 and 10. FIG. 9 is a sectional view showing the gas reforming device 100 according to modified example 3 of Embodiment 1. FIG. 10 is a sectional view of section D-D shown in FIG. 9.

In Embodiment 1, a case in which the opening 52, which is an opening that communicates the first reaction chamber 41 and the second reaction chamber 42, is provided in the second electrode 32 has been described as an example. However, it is not essential that the opening 52 is provided in the second electrode 32, and the opening 52 may be provided in another component.

As shown in FIG. 9, in the gas reforming device 100 of modified example 3, the reaction container 2 has a structure including a partition portion 21 that partitions a first reaction chamber 41 and a second reaction chamber 42. The opening 52, which is an opening that communicates the first reaction chamber 41 and the second reaction chamber 42, is provided in the partition portion 21. Further, on a surface of the partition portion 21 that faces the first electrode 31 (surface on the +Z direction side), the second electrode 32 is disposed. Further, as shown in FIG. 10, the second electrode 32 is composed of four rectangular flat plates.

The material constituting the partition portion 21 is not particularly limited. Since the second electrode 32 is attached to the partition portion 21, it is preferable that the material constituting the partition portion 21 is a material that is easy to process. Further, it is preferable that the material constituting the partition portion 21 has good durability against the plasma P. The partition portion 21 is composed of ceramics such as alumina (Al₂O₃), zirconia (ZrO₂), and magnesia (MgO), for example.

In the gas reforming device 100 of modified example 3, the partition portion 21 functions as a member that thermally partitions the first reaction chamber 41 and the second reaction chamber 42.

Note that the second electrode 32 may be a ring shape, and the opening 52, which is an opening that communicates the first reaction chamber 41 and the second reaction chamber 42, may be provided in both the second electrode 32 and the partition portion 21. In this case, both the partition portion 21 and the second electrode 32 function as members that thermally partition the first reaction chamber 41 and the second reaction chamber 42.

In the gas reforming device 100 of modified example 3, since the second electrode 32 is provided in the partition portion 21, the second electrode 32 can be easily replaced when it is worn or deformed. According to the gas reforming device 100 of modified example 3, the second electrode 32 can be easily replaced, so that the man-hours required for maintenance of the gas reforming device 100 can be reduced.

### Modified example 4

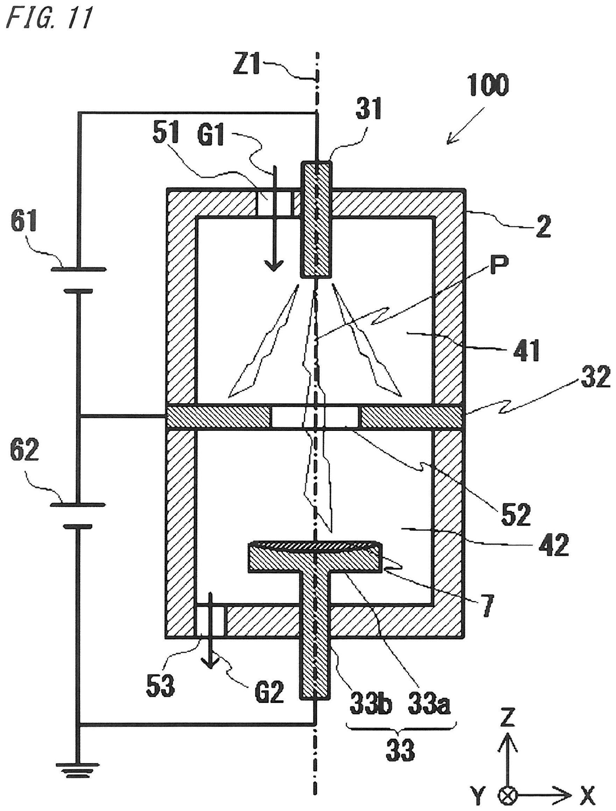

Modified example 4 of Embodiment 1 will be described with reference to FIG. 11. FIG. 11 is a cross-sectional view showing the gas reforming device 100 of modified example 4 of Embodiment 1.

In the gas reforming device 100 of Embodiment 1, how the gas reforming device 100 is arranged with respect to the gravity direction is not defined. On the other hand, the gas reforming device 100 of modified example 4 assumes a case where the second reaction chamber 42 is arranged below the first reaction chamber 41 in the gravity direction.

As shown in FIG. 11, in a case where the second reaction chamber 42 is arranged below the first reaction chamber 41 in the gravity direction (-Z direction), even if the reaction accelerator 7 is a granular or powdery substance, it can be stably disposed on the third electrode 33.

Further, in the gas reforming device 100 of modified example 4, a front end surface of the third electrode 33, which is a drawing electrode, is recessed when viewed from above in the gravity direction (+Z direction). That is, in the third electrode 33, a surface on the gravity-direction upper side of a front end portion 33a is recessed. With such a configuration, even if the reaction accelerator 7 is a granular or powdery substance, the reaction accelerator 7 can be stably disposed on the third electrode 33.

### Modified example 5

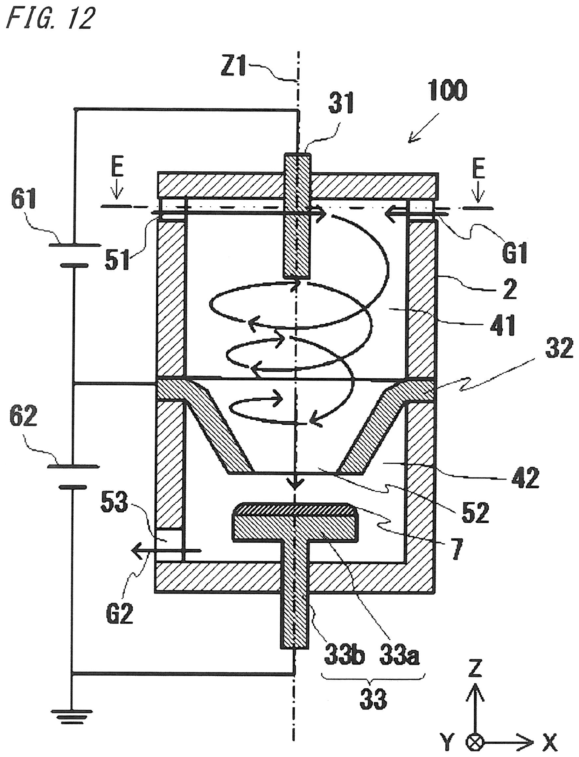

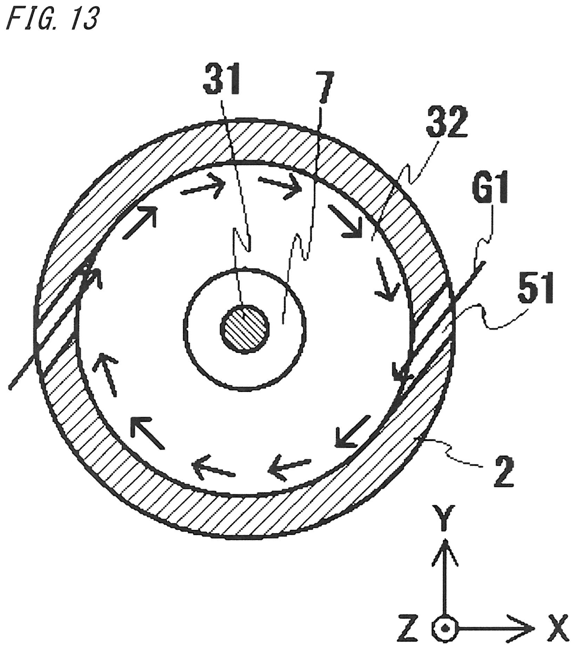

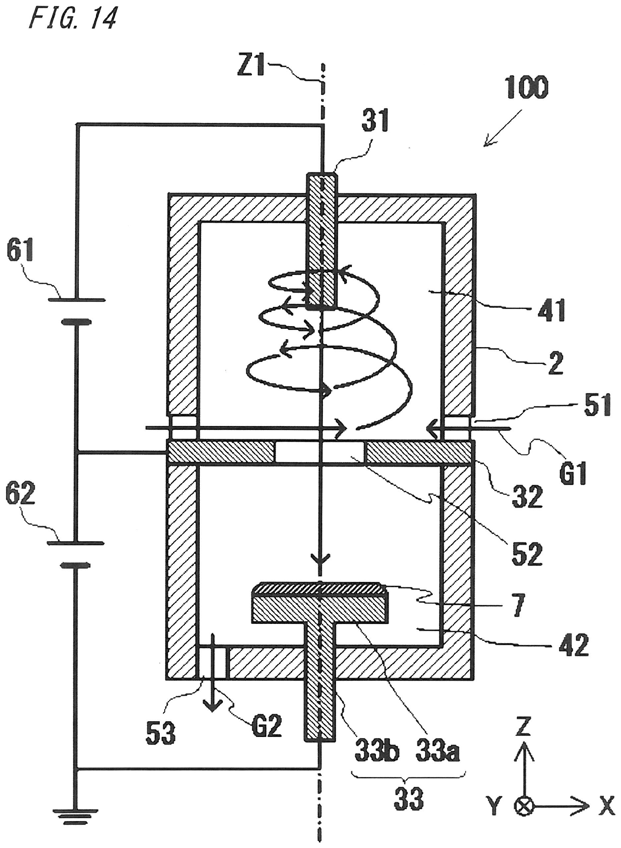

Modified example 5 of Embodiment 1 will be described with reference to FIGS. 12 to 14. FIGS. 12 and 14 are cross-sectional views showing configuration examples of the gas reforming device 100 of modified example 5 of Embodiment 1, respectively. FIG. 13 is a cross-sectional view of an E-E section shown in FIG. 12.

In Embodiment 1, the flow of the gas to be reformed G1 in the first reaction chamber 41 has been described without being particularly defined. In modified example 5, cases will be described where the flow of the gas to be reformed G1 in the first reaction chamber 41 becomes a forward vortex flow and a reverse vortex flow.

First, an example of the configuration of the gas reforming device 100 for forming a forward vortex flow of the gas to be reformed G1 in the first reaction chamber 41 will be described. In the gas reforming device 100 shown in FIG. 12, gas inlets 51 are provided at two locations at an end portion, on a +Z direction side, of a side surface of the reaction container 2 on which the first electrode 31 is disposed.

Here, as shown in FIG. 13, the shape of the reaction container 2 is cylindrical with end surfaces at both ends. Also, each of gas inlets 51 has a shape such that the introduced gas to be reformed G1 flows along the inner wall surface of the first reaction chamber 41. Specifically, as shown in FIG. 13, when viewed from the axial direction (Z direction) of the reaction container 2, each of gas inlets 51 is formed so that the opening direction of the gas inlet 51 faces the tangential direction of the inner wall surface of the reaction container 2. However, the structure for flowing the gas to be reformed G1 introduced from the gas inlet 51 along the inner wall surface of the first reaction chamber 41 is not limited to this. For example, the reaction container 2 may separately include a member for making the flow of the gas to be reformed G1 introduced from the gas inlet 51 into a flow along the inner wall surface of the first reaction chamber 41.

The gas to be reformed G1 flows toward the opening 52 while swirling in the circumferential direction around the axis of symmetry (Z1 axis) of the cylindrical reaction container 2. In this way, a forward vortex flow is generated in the first reaction chamber 41.

Further, in the gas reforming device 100 shown in FIG. 12, the second electrode 32 has an inner wall in a conical shape whose inner diameter becomes narrower toward the second reaction chamber 42 side (-Z direction side). By adopting such a configuration, the vortex flow of the gas to be reformed G1 can be maintained, and the flow velocity can be increased so that the gas to be reformed G1 flows into the second reaction chamber 42.

Note that it is not essential that the number of gas inlets 51 be two, and it may be one. Also, the number of gas inlets 51 may be more than two. However, in the case where a plurality of gas inlets 51 are provided, a more stable generation of a forward vortex flow can be achieved than in the case where the gas inlet 51 is only one. Further, when a plurality of gas inlets 51 are provided, it is preferable that the gas inlets 51 be provided so as to be rotationally symmetric with respect to the central axis of the reaction container 2, when viewed from the axial direction (Z direction) of the reaction container 2. Here, "rotationally symmetric" means a configuration in which the arrangement of the gas inlets 51 coincides when rotated by (360°/n) about the central axis (Z1 axis) of the reaction container 2, where n is an integer of 2 or more. By providing the gas inlets 51 so as to be rotationally symmetric with respect to the central axis of the reaction container 2 when viewed from the axial direction (Z direction), the forward vortex flow can be generated more stably.

Further, in FIG. 13, an example is shown in which the gas to be reformed G1 swirls clockwise when viewed in the direction from the first reaction chamber 41 toward the second reaction chamber 42 (-Z direction), but the swirling direction of the gas to be reformed G1 may be opposite.

When the flow of the gas to be reformed G1 in the first reaction chamber 41 is a forward vortex flow, the plasma P is stably maintained away from the inner wall of the first reaction chamber 41 (closer to the Z1 axis side), so it is easy to maintain the plasma P in a high-temperature state.

Further, when the flow of the gas to be reformed G1 in the first reaction chamber 41 is a forward vortex flow, the gas to be reformed G1 can be retained in the first reaction chamber 41 for a longer time compared to the case where a vortex flow is not generated.

Next, an example of the configuration of the gas reforming device 100 for making the flow of the gas to be reformed G1 in the first reaction chamber 41 into a reverse vortex flow will be described. In the gas reforming device 100 shown in FIG. 14, two gas inlets 51 are provided at the position on the side surface of the reaction container 2 that contacts the second electrode 32. The shape of the reaction container 2 is a cylindrical shape with end surfaces at both ends, as in the example of the forward vortex flow. Also, as in the example of the forward vortex flow, the reaction container 2 has a structure in which the gas to be reformed G1 introduced from the gas inlets 51 flows along the inner wall surface of the first reaction chamber 41.

The gas to be reformed G1 flows toward the first electrode 31 side (+Z direction side) of the first reaction chamber 41 while swirling in the circumferential direction around the symmetric axis (Z1 axis) of the reaction container 2 having a cylindrical shape. Then, after reaching the inner wall on the first electrode 31 side (+Z direction side) of the first reaction chamber 41, it flows toward the opening 52 side (-Z direction side) through the center side (Z 1 axis side) of the swirling flow before reaching the inner wall on the first electrode 31 side. In this way, a reverse vortex flow is generated inside the first reaction chamber 41.

Even when the flow of the gas to be reformed G1 in the first reaction chamber 41 is a reverse vortex flow, the plasma P is stably maintained away from the inner wall of the first reaction chamber 41 (closer to the Z1 axis side). Here, the effect of stably maintaining the plasma P is greater in the case of a reverse vortex flow than in the case of a forward vortex flow in the first reaction chamber 41, and the effect of maintaining the plasma P in a high-temperature state is also greater.

Also, when the flow of the gas to be reformed G1 in the first reaction chamber 41 is a reverse vortex flow, the gas to be reformed G1 can be retained in the first reaction chamber 41 for a longer time compared to the case where no vortex flow is generated.

Note that, when the flow of the gas to be reformed G1 in the first reaction chamber 41 is a reverse vortex flow, the number of gas inlets 51 and the swirling direction of the vortex flow are not limited. Further, in order to generate a reverse vortex flow more stably, it is preferable that the gas inlets 51 be provided so as to be rotationally symmetric with respect to the symmetric axis of the reaction container 2, when viewed from the axial direction (Z direction) of the reaction container 2.

Also, in the case where the reaction container 2 has a structure including the partition portion 21 that partitions the first reaction chamber 41 and the second reaction chamber 42 (see FIG. 9), the gas inlets 51 may be provided at a position on the side surface of the reaction container 2 that contacts the partition portion 21.

According to the gas reforming device 100 of modified example 5, since the plasma P is stably maintained away from the inner wall of the first reaction chamber 41 (closer to the Z1 axis side), an effect is obtained in which the plasma P is more likely to be maintained at a high temperature. Then, according to the gas reforming device 100 of modified example 5, since the plasma P maintained at a high temperature can be made to reach the third electrode 33, the reaction efficiency between the gas to be reformed G1 and the reaction accelerator 7 can be further improved.

Further, according to the gas reforming device 100 of modified example 5, since the gas to be reformed G1 stays longer in the first reaction chamber 41 due to the vortex flow, the contact time between the gas to be reformed G1 and the plasma P can be extended, and the reforming efficiency of the gas to be reformed G1 can be improved.

### Modified example 6

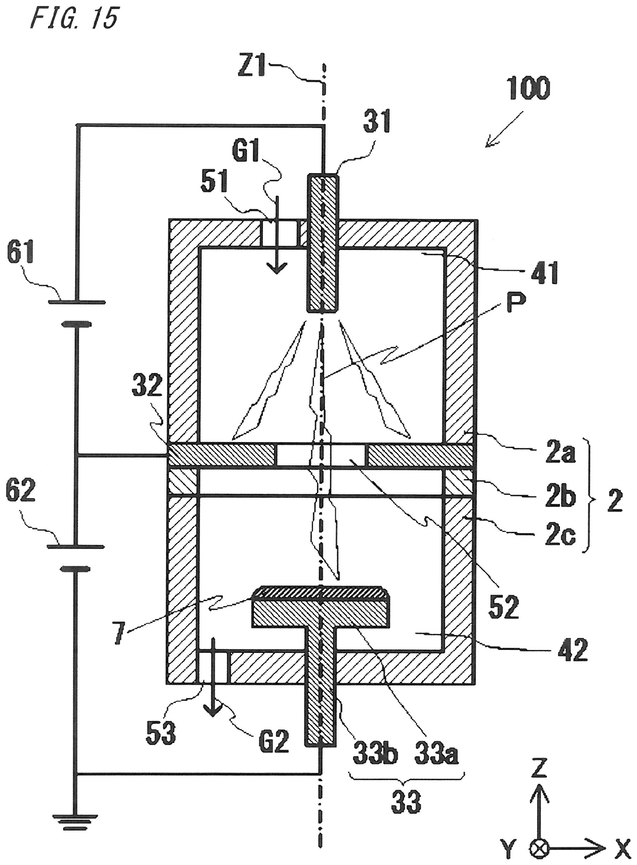

A modified example 6 of Embodiment 1 will be described with reference to FIG. 15. FIG. 15 is a sectional view showing the gas reforming device 100 according to modified example 6 of Embodiment 1.

Regarding Embodiment 1, it has been described that it is preferable that the material constituting the reaction container 2 be a material having high insulation and durability. However, as long as the first electrode 31, the second electrode 32, and the third electrode 33 are electrically insulated from each other, the reaction container 2 may be constituted including a metal.

FIG. 15 shows an example in which a portion of the reaction container 2 that constitutes the second reaction chamber 42 is constituted including a metal. In the gas reforming device 100 shown in FIG. 15, the reaction container 2 includes a first body portion 2a made of an insulating material, an insulating portion 2b made of an insulating material, and a second body portion 2c made of a metal.

Since the configuration of the first body portion 2a is the same as that of the gas reforming device 100 of Embodiment 1, the description is omitted. The third electrode 33 is attached to the second body portion 2c. The second body portion 2c and the third electrode 33 are also electrically connected. Since the insulating portion 2b is interposed between the second body portion 2c and the second electrode 32, the second body portion 2c and the second electrode 32 are electrically insulated. Then, the third electrode 33 and the second electrode 32 are also electrically insulated.

The type of metal constituting the second body portion 2c is not particularly limited. For example, tungsten may be employed as the metal constituting the second body portion 2c in order to improve the heat resistance of the gas reforming device 100. Alternatively, aluminum may be employed as the metal constituting the second body portion 2c in order to reduce the weight of the gas reforming device 100.

The insulating material constituting the insulating portion 2b is not particularly limited. Examples of the insulating material constituting the insulating portion 2b include glass, ceramics, and resin. Specific examples of the glass constituting the insulating portion 2b include quartz glass and borosilicate glass. Specific examples of the ceramics constituting the insulating portion 2b include alumina (Al₂O₃), zirconia (ZrO₂), and magnesia (MgO). Specific examples of the resin constituting the insulating portion 2b include PTFE (polytetrafluoroethylene) and PEEK (polyetheretherketone).

According to the gas reforming device 100 of modified example 6, since the reaction container 2 is constituted including a metal, an effect is obtained in which a function corresponding to the characteristics of the metal, such as heat resistance or weight reduction, can be imparted to the reaction container 2.

### Embodiment 2

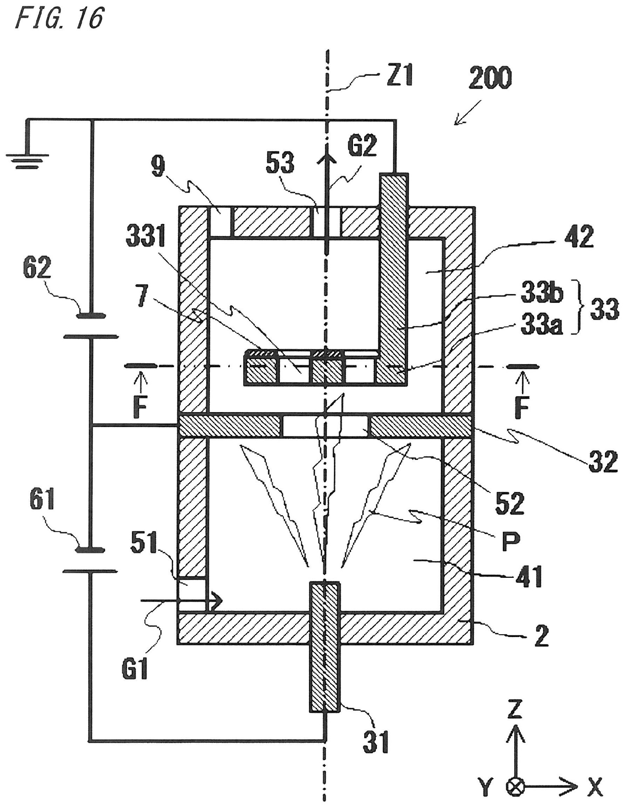

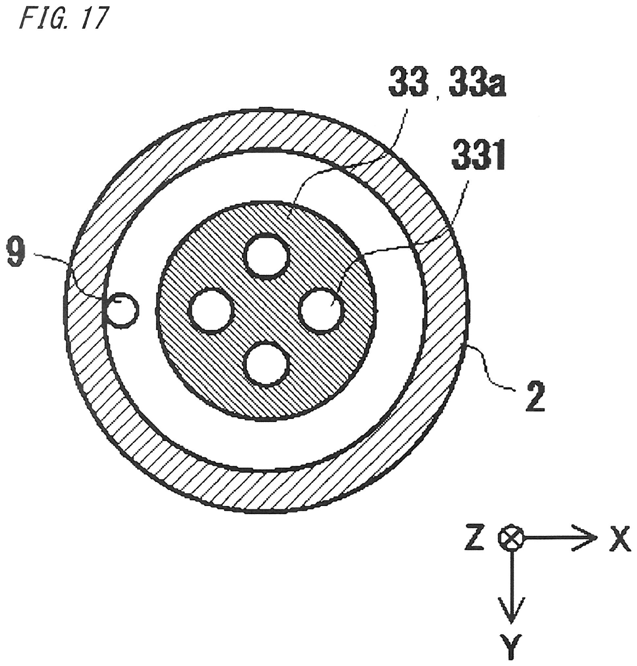

The configuration of the gas reforming device 200 according to Embodiment 2 will be described with reference to FIGS. 16 and 17. In modified example 4 of the gas reforming device 100 according to Embodiment 1, a case in which the second reaction chamber 42 is disposed below the first reaction chamber 41 in the direction of gravity was described. The gas reforming device 200 according to Embodiment 2 describes an example of a configuration in which the first reaction chamber 41 is disposed below the second reaction chamber 42 in the direction of gravity. Accordingly, descriptions of the points common to the gas reforming device 100 of Embodiment 1 will be omitted or simplified. Further, the same reference numerals are given to the configurations common to the gas reforming device 100 of Embodiment 1.

The gas reforming device 200 of the present embodiment includes, similarly to the gas reforming device 100 of Embodiment 1, a reaction container 2, a first electrode 31, a second electrode 32, a third electrode 33 which is a lead-out electrode, and a reaction accelerator 7. Further, the reaction container 2 includes a first reaction chamber 41 and a second reaction chamber 42.

FIG. 16 is a sectional view showing the gas reforming device 200 according to Embodiment 2. FIG. 17 is a sectional view taken along the line F-F shown in FIG. 16. Further, in FIGS. 16 and 17, the direction from the first reaction chamber 41 to the second reaction chamber 42 (+Z direction) corresponds to the upward direction of gravity.

Also in the gas reforming device 200 according to Embodiment 2, since the reaction accelerator 7 is disposed inside the second reaction chamber 42, which is thermally separated from the first reaction chamber 41, the reaction accelerator 7 can be maintained in a high temperature state.
Therefore, according to the gas reforming device 200 of Embodiment 2, the gas to be reformed G1 can be reformed efficiently.

As shown in FIG. 16, in the gas reforming device 200 according to Embodiment 2, the second reaction chamber 42 is located above the first reaction chamber 41 in the direction of gravity (+Z direction). The third electrode 33, which is the lead-out electrode, is disposed in the second reaction chamber 42. Further, as shown in FIGS. 16 and 17, on the upper surface of the reaction container 2 in the direction of gravity, an inlet 9 for supplying the reaction accelerator 7 to the third electrode 33 is provided separately from the gas outlet 53.

As shown in FIGS. 16 and 17, a through-hole 331 through which the gas to be reformed G1 passes is provided in a distal end portion 33a of the third electrode 33. Note that the shape of the third electrode 33 in the present embodiment is merely one example. For example, the cross-sectional shape of the distal end portion 33a in a plane (XY plane) perpendicular to the direction in which the first electrode 31 and the second electrode 32 face each other may be rectangular. Further, the cross-sectional shape of the through-hole 331 in the XY plane may also be non-circular. For example, the cross-sectional shape of the through-hole 331 in the XY plane may be rectangular.

In the case where the reaction accelerator 7 is a substance that is consumed in the process of reforming the gas to be reformed G1, it is necessary to supply the reaction accelerator 7 to the third electrode 33 in order to maintain the reforming efficiency of the gas to be reformed G1 by the gas reforming device 200. As a specific example, in the case where the reaction accelerator 7 is carbon and carbon monoxide (CO) is generated from carbon dioxide (CO₂) contained in the gas G1 to be reformed, carbon is consumed, as shown in Equation (4) reproduced below.

C + CO₂ ⇄ 2CO ... (4)

In the gas reforming device 200 according to Embodiment 2, when the reaction accelerator 7 is introduced from the inlet 9 provided above the third electrode 33 in the direction of gravity (+Z direction), the reaction accelerator 7 is supplied to the third electrode 33 according to gravity. Therefore, according to the gas reforming device 200 of Embodiment 2, the reaction accelerator 7 can be easily supplied to the third electrode 33 without stopping the operation of the gas reforming device 200.

The configuration of the gas reforming device 200 described above with reference to FIGS. 16 and 17 is merely an example, and the gas reforming device 200 of the present embodiment can adopt various variations. Hereinafter, the structure in a modified example will be described with reference to drawings.

### Modified example.

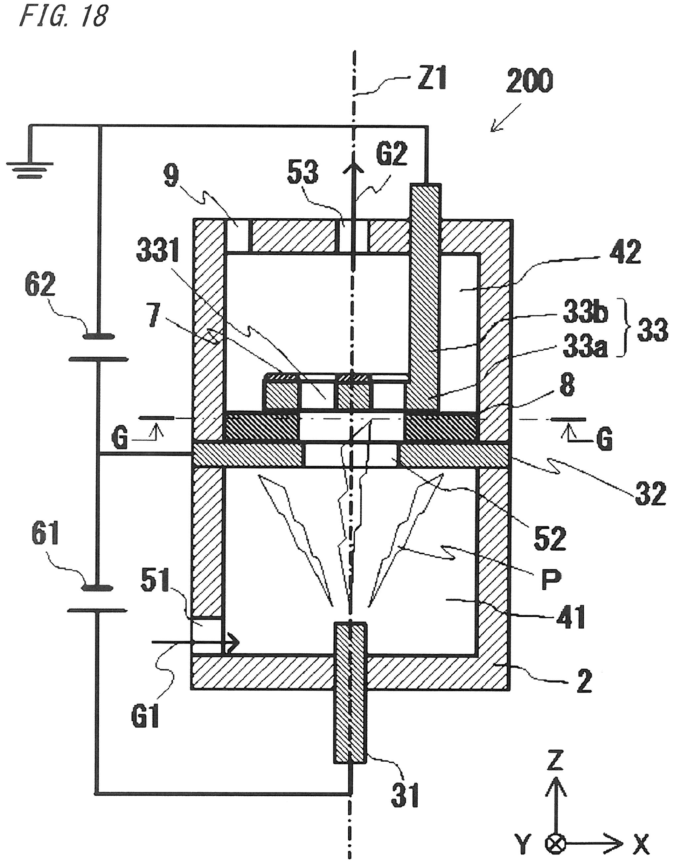

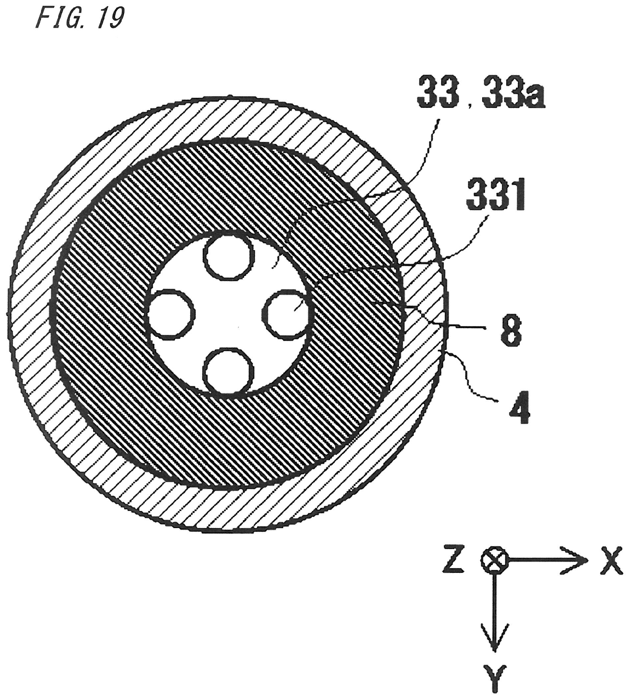

A modified example of Embodiment 2 will be described with reference to FIGS. 18 and 19. FIG. 18 is a cross-sectional view showing the gas reforming device 200 according to the modified example of Embodiment 2. FIG. 19 is a cross-sectional view of the G-G section shown in FIG. 18. Note that FIG. 16 is also referred to for explaining the effects of the modified example of Embodiment 2.

As shown in FIGS. 18 and 19, in the gas reforming device 200 according to the modified example, an insulating member 8 is disposed between the second electrode 32 and the third electrode 33. The insulating member 8 is attached to the reaction container 2. Note that when the insulating member 8 is made of the same insulating material as the reaction container 2, the insulating member 8 may be formed integrally with the reaction container 2. Further, it is not essential that the insulating member 8 is attached to the reaction container 2, and the insulating member 8 may be attached to the second electrode 32 or the third electrode 33.

As shown in FIGS. 18 and 19, the shape of an insulating member 8 is ring-shaped. However, the shape of the insulating member 8 is merely an example and is not limited to a ring shape. For example, in a case where a shape of an opening of the opening 52 is a rectangular shape, the shape of the insulating member 8 may be a shape having a rectangular opening.

An insulating material forming the insulating member 8 is not particularly limited. Examples of the insulating material forming the insulating member 8 include glass, ceramics, and resin. Specific examples of the glass forming the insulating member 8 include quartz glass or borosilicate glass. Specific examples of the ceramics forming the insulating member 8 include alumina (Al₂O₃), zirconia (ZrO₂), and magnesia (MgO). Specific examples of the resin forming the insulating member 8 include PTFE and PEEK.

An effect of the gas reforming device 200 according to the modified example of Embodiment 2 will be described in comparison with the gas reforming device 200 according to Embodiment 2. In the gas reforming device 200 according to Embodiment 2, the third electrode 33 was arranged apart so as not to be in contact with the second electrode 32 (see FIG. 16). Therefore, as a path through which the gas to be reformed G1 flowing in from the opening 52 proceeds toward the gas outlet 53, there were a path passing through the through-hole 331 and a path passing between the second electrode 32 and the third electrode 33.

Here, in order to enhance a reforming efficiency of the gas to be reformed G1, it is preferable to bring the gas to be reformed G1 into contact with the reforming accelerator 7 as much as possible. Then, the gas to be reformed G1 can be brought into contact with the reforming accelerator 7 more efficiently when passing through the through-hole 331 than between the second electrode 32 and the third electrode 33.

Then, in the gas reforming device 200 according to the modified example, in order to suppress the gas to be reformed G1 from passing between the second electrode 32 and the third electrode 33, and allow more of the gas to be reformed G1 to pass through the through-hole 331, the insulating member 8 is disposed between the second electrode 32 and the third electrode 33.

In the gas reforming device 200 according to the modified example, compared to the case where the insulating member 8 is not provided, a larger amount of the gas to be reformed G1 can be allowed to flow into the through-hole 331. Therefore, according to the gas reforming device 200 of the modified example, the gas to be reformed G1 and the reaction accelerator 7 can be brought into contact with each other efficiently, and the reforming efficiency of the gas to be reformed G1 can be increased.

Note that, the insulating member 8 needs to be arranged so as to suppress the gas to be reformed G1 from passing between the second electrode 32 and the third electrode 33 and to allow a larger amount of the gas to be reformed G1 to flow into the through-hole 331. For example, a gap may be provided between the insulating member 8 and the second electrode 32, or between the insulating member 8 and the third electrode 33. That is, it is not essential to allow all of the gas to be reformed G1 flowing in from the opening 52 to flow into the through-hole 331.

As described above, Embodiment 1 and Embodiment 2 of the present invention have been described. The present invention is not limited to the above examples, and various design changes can be made within a range that satisfies the configuration of the present invention. For example, when at least one configuration in the present invention is modified, added, or omitted, or when at least one component is extracted and combined with components of other embodiments, such modified example is also possible.

The gas reforming device according to the present invention can reform a highly hazardous substance contained in the gas to be reformed into a less hazardous substance. Therefore, the gas reforming device according to the present invention contributes to the Goal 3 of the Sustainable Development Goals (SDGs) , which states "Ensure healthy lives and promote well-being for all at all ages", led by the United Nations.

Further, the gas reforming device according to the present invention can reform the gas to be reformed into a substance that can be used as fuel. Therefore, the gas reforming device according to the present invention contributes to the Goal 7 of the Sustainable Development Goals (SDGs), which states "Ensure access to affordable, reliable, sustainable and modern energy for all", led by the United Nations.

Further, the gas reforming device according to the present invention can reform the gas to be reformed, which has a high global warming potential, into a substance with a low global warming potential. Therefore, the gas reforming device according to the present invention contributes to the Goal 13 of the Sustainable Development Goals (SDGs), which states "Take urgent action to combat climate change and its impacts", led by the United Nations.

### DESCRIPTION OF THE REFERENCE CHARACTERS

- 100, 200: gas reforming device
- 2: reaction container
- 21: partition portion
- 2a: first body portion
- 2b: insulating portion
- 2c: second body portion
- 31: first electrode
- 32: second electrode
- 33: third electrode (lead-out electrode)
- 33a: distal end portion
- 33b: shaft portion
- 331: through-hole
- 41: first reaction chamber
- 42: second reaction chamber
- 51: gas inlet
- 52: opening
- 53: gas outlet
- 61: first power supply
- 62: second power supply
- 63: passive element
- 7: reaction accelerator
- 8: insulating member
- 9: charging port
- G1: gas to be reformed
- G2: reformed gas
- P: plasma

## Claims

1. A gas reforming device comprising:
a reaction container including a first reaction chamber into which a gas to be reformed flows, and a second reaction chamber into which the gas to be reformed flows after passing through the first reaction chamber, the second reaction chamber being thermally separated from the first reaction chamber;
a first electrode and a second electrode which are provided in the first reaction chamber and configured to generate plasma in the first reaction chamber;
a lead-out electrode which is provided in the second reaction chamber and configured to draw out the plasma from the first reaction chamber into the second reaction chamber; and
a reaction accelerator disposed on the lead-out electrode.

2. The gas reforming device according to claim 1, wherein
the reaction container is provided with a partition portion that thermally separates the first reaction chamber and the second reaction chamber, and
the partition portion is formed with an opening that communicates the first reaction chamber and the second reaction chamber.

3. The gas reforming device according to claim 2, wherein
the second electrode is disposed on the partition portion.

4. The gas reforming device according to claim 1, wherein
the second electrode is formed with an opening that communicates the first reaction chamber and the second reaction chamber.

5. The gas reforming device according to any one of claims 2 to 4, wherein
the lead-out electrode is provided at a position facing the opening.

6. The gas reforming device according to any one of claims 2 to 5, wherein
the reaction accelerator is disposed at a portion of the lead-out electrode that facing the opening.

7. The gas reforming device according to any one of claims 2 to 6, wherein
the reaction container has an axisymmetric shape.

8. The gas reforming device according to claim 7, wherein
the opening is formed on a symmetry axis of the reaction container.

9. The gas reforming device according to claim 7 or 8, wherein
the gas inlet for allowing the gas to be reformed to flow into the first reaction chamber is provided at an end portion of a side surface of the reaction container on a side where the first electrode is disposed, and
the reaction container has a structure in which the gas to be reformed that has flowed in from the gas inlet flows along an inner wall surface of the first reaction chamber.

10. The gas reforming device according to claim 9, wherein
a plurality of the gas inlets are provided so as to be rotationally symmetric with respect to the symmetry axis of the reaction container when viewed in a direction along the symmetry axis.

11. The gas reforming device according to claim 2 or 3, wherein
the reaction container has an axisymmetric shape,
a gas inlet for allowing the gas to be reformed to flow into the first reaction chamber is provided on a side surface of the reaction container so as to be in contact with the second electrode or the partition portion, and
the reaction container has a structure in which the gas to be reformed that has flowed in from the gas inlet flows along an inner wall surface of the first reaction chamber.

12. The gas reforming device according to claim 11, wherein
a plurality of the gas inlets are provided so as to be rotationally symmetric with respect to the symmetry axis of the reaction container when viewed in a direction along the symmetry axis.

13. The gas reforming device according to any one of claims 1 to 12, wherein
the first reaction chamber is provided above the second reaction chamber in a gravity direction, and
a front end face of the lead-out electrode is recessed when viewed from above in the gravity direction.

14. The gas reforming device according to any one of claims 1 to 12, wherein
the second reaction chamber is provided above the first reaction chamber in a gravity direction, and
the lead-out electrode has a through-hole that allows the gas to be reformed that has flowed into the second reaction chamber to pass therethrough.

15. The gas reforming device according to any one of claims 2 to 12, wherein
the second reaction chamber is provided above the first reaction chamber in a gravity direction,
the lead-out electrode has a through-hole that allows the gas to be reformed that has flowed into the second reaction chamber to pass therethrough, and
the lead-out electrode is disposed with the through-hole facing the opening.

16. The gas reforming device according to claim 14 or 15, wherein
an insulating member is disposed between the second electrode and the lead-out electrode, the insulating member being configured to suppress the gas to be reformed from passing between the second electrode and the lead-out electrode.

17. The gas reforming device according to any one of claims 1 to 16, wherein
the reaction container is configured to include a metal, and
the first electrode and the second electrode, the first electrode and the lead-out electrode, and the second electrode and the lead-out electrode are electrically insulated from each other.

18. The gas reforming device according to any one of claims 1 to 17, wherein a distal end portion of the first electrode is ring-shaped.

19. The gas reforming device according to any one of claims 1 to 18, wherein the reaction accelerator is a catalyst.

20. The gas reforming device according to any one of claims 1 to 18, wherein the gas to be reformed includes carbon dioxide, and
the reaction accelerator includes carbon.
